(19) Europäisches Patentamt
European Patent Office
Office européen des brevets

(11) **EP 3 321 882 B1**

(12) **EUROPEAN PATENT SPECIFICATION**

(45) Date of publication and mention
of the grant of the patent:
**11.03.2020 Bulletin 2020/11**

(51) Int Cl.:
***G06T 7/593*** *(2017.01)*

(21) Application number: **17189984.2**

(22) Date of filing: **07.09.2017**

(54) **MATCHING COST COMPUTATION METHOD AND DEVICE**

ANPASSUNGSKOSTENBERECHNUNGSVERFAHREN UND -VORRICHTUNG

PROCÉDÉ DE CALCUL DE COÛTS DE MISE EN CORRESPONDANCE ET DISPOSITIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.11.2016 CN 201610988828**

(43) Date of publication of application:
**16.05.2018 Bulletin 2018/20**

(73) Proprietor: **Ricoh Company, Ltd.
Tokyo 143-8555 (JP)**

(72) Inventors:
• **LIU, Zhenhua
Haidian District, Beijing 100044 (CN)**
• **LIU, Dianchao
Haidian District, Beijing 100044 (CN)**
• **SHI, Zhongchao
Haidian District, Beijing 100044 (CN)**

(74) Representative: **White, Duncan Rohan
Marks & Clerk LLP
Fletcher House (2nd Floor)
Heatley Road
The Oxford Science Park
Oxford OX4 4GE (GB)**

(56) References cited:
• **OHASHI AKIRA ET AL: "Fisheye stereo camera using equirectangular images", 2016 11TH FRANCE-JAPAN & 9TH EUROPE-ASIA CONGRESS ON MECHATRONICS (MECATRONICS) /17TH INTERNATIONAL CONFERENCE ON RESEARCH AND EDUCATION IN MECHATRONICS (REM), IEEE, 15 June 2016 (2016-06-15), pages 284-289, XP032946595, DOI: 10.1109/MECATRONICS.2016.7547156 [retrieved on 2016-08-17]**
• **LI JING ET AL: "Fisheye image rectification for efficient large-scale stereo", 2016 3RD INTERNATIONAL CONFERENCE ON SYSTEMS AND INFORMATICS (ICSAI), IEEE, 19 November 2016 (2016-11-19), pages 881-885, XP033038464, DOI: 10.1109/ICSAI.2016.7811075 [retrieved on 2017-01-06]**
• **Nassir Navab: "Stereo Vision II: Dense Stereo Matching", , 15 December 2011 (2011-12-15), XP055424744, Retrieved from the Internet: URL:http://campar.in.tum.de/twiki/pub/Chai r/TeachingWs11Cv2/3D_CV2_WS_2011_Stereo. pd f [retrieved on 2017-11-14]**
• **ABRAHAM S ET AL: "Fish-eye-stereo calibration and epipolar rectification", ISPRS JOURNAL OF PHOTOGRAMMETRY AND REMOTE SENSING, AMSTERDAM [U.A.] : ELSEVIER, AMSTERDAM, NL, vol. 59, no. 5, August 2005 (2005-08), pages 278-288, XP027806733, ISSN: 0924-2716 [retrieved on 2005-08-01]**

**Description**

BACKGROUND OF THE DISCLOSURE

1. Field of the Disclosure

The present disclosure relates to the field of image processing, more particularly relates to a matching cost computation method and a matching cost computation device.

2. Description of the Related Art

Stereo matching has been widely used in many fields such as robotics, monitoring, intelligent vehicles, and so on. The disparity information (also called "depth information") obtained by way of stereo matching may be utilized to estimate the relative distance between an image capture device and an object. For example, in a case of an intelligent vehicle, on the basis of the disparity information acquired by means of stereo matching, it is easy to recognize a road surface, a white line, a fence, etc., so as to detect targets such as pedestrians, cars, and the like and classify the targets. In this way, it is possible to comprehensively grasp the driving situation of the intelligent vehicle.

The basic principle of stereo matching is seeking, by comparing the images of the same object taken by an image capture device (e.g., a stereo camera) under two or more different angles of view (in a case of a two-lens or multi-lens camera), corresponding pixels from the images to compute the positional deviations between the pixels in a reference image and a target image so as to obtain disparity information, and then, generating a disparity map on the grounds of the disparity information. Generally speaking, in a stereo matching algorithm based on pinhole cameras, each given pixel in a reference image adopts a fixed support region, and each candidate pixel in a target image of the same given pixel in the reference image also uses a fixed support region.

However, when a stereo camera is composed of panoramic cameras, for examples, fisheye cameras, due to the imaging principle of the panoramic cameras, distortion may occur in the images obtained by the panoramic cameras. That is, the same object may show different shapes in the related reference and target images. As a result, an approach of conducting stereo matching by employing fixed support regions in conventional techniques will no longer apply because it easily begets an erroneous disparity map/depth map.

There is disclosed in "Fisheye Stereo camera using equirectangular images", OHASHI AKIRA ET AL, XP032946595, the use of fisheye cameras for a stereo camera. Persepctive transformation is applied to the images so that feature points of far objects coincide in the images of the two cameras to remove mismatches due to errors in intrinsic and extrinsic parameters. The corresponding points are calculated by using stereo matching in the deformed image and the distance is measured from the disparity.

SUMMARY OF THE DISCLOSURE

The invention provides a matching cost computation method as claimed in claim 1 and a device as claimed in claim 7.

On the basis of the matching cost computation method and the matching cost computation devices, it is possible to respectively conduct projection with respect to reference and target stereo images captured by panoramic cameras forming a stereo camera, and determine, on the grounds of the predetermined mapping relationship, two corresponding pixels and their neighboring regions in the relevant reference and target projection images, so as to compute the matching cost between two corresponding pixels. In addition, since the factors which may affect the distortion occurring in the stereo images obtained by the panoramic cameras are taken in account by utilizing the predetermined mapping relationship, it is also possible to procure a more accurate matching result and disparity information.

BRIEF DESCRIPTION OF THE DRAWINGS

FIG. 1 illustrates an example of performing matching cost computation on panoramic images by employing a conventional matching cost computation algorithm;

FIGS. 2A and 2B illustrate the same object (i.e., a Rubik's Cube) obtained from the left and right images in FIG. 1, respectively;

FIG. 3 illustrates an example of adjusting two corresponding fixed support regions in reference and target projection images into two corresponding adaptive support regions therein;

FIG. 4 is a flowchart of a matching cost computation method according to a first embodiment of the present disclosure;

FIG. 5 illustrates an example of performing equirectangular projection on a stereo image;

FIG. 6 illustrates an example of coordinate conversion from a X-Y planar coordinate system into a geographic coordinate system;

FIG. 7 illustrates an example of carrying out circumscribed plane projection with regard to two stereo images respectively captured by two panoramic cameras in a stereo camera under two different angels of view;

FIG. 8 illustrates an exemplary distribution of first neighboring regions obtained by projecting, after first projection regions having the same shape and size are chosen on the related reference perspective image, the first projection regions onto the related reference projection image;

FIG. 9 illustrates an exemplary matching cost curve;
FIG. 10 is a block diagram of a matching cost computation device according to a second embodiment of the present disclosure; and
FIG. 11 illustrates a block diagram of another matching cost computation device according to a third embodiment of the present disclosure.

DETAILED DESCRIPTION OF THE PREFERRED EMBODIMENTS

In order to let a person skilled in the art better understand the present disclosure, hereinafter, the embodiments of the present disclosure will be concretely described with reference to the drawings. However it should be noted that the same symbols, which are in the specification and the drawings, stand for constructional elements having basically the same function and structure, and repeated explanations to the constructional elements are omitted.

In the conventional techniques, a stereo matching approach of a pinhole camera based stereo camera is mainly inclusive of a local stereo matching algorithm (e.g., a block matching algorithm), a global stereo matching algorithm (e.g., dynamic programming), a semi-global stereo matching algorithm (e.g., a semi-global matching (SGM) algorithm), etc. This kind of stereo matching approach usually contains the following steps (or a few steps thereof), namely, matching cost computation, cost aggregation, disparity computation, and disparity refinement. Among these, the matching cost computation step is of high importance which may contain the following sub steps, i.e., (1) for a given pixel in a reference projection image, selecting a neighboring region to serve as a support region of the given pixel; (2) regarding each candidate pixel in the related target projection image pertaining to the given pixel in the reference projection image, choosing a neighboring region to serve as a support region of the same candidate pixel; and (3) by comparing the support region in the reference projection image and the respective support regions in the target projection image, calculating matching costs.

Furthermore, in such a matching cost computation step, each given pixel in the reference projection image usually adopts a fixed support region. At the same time, for the position of each candidate pixel in the target projection image relating to the same given pixel in the reference projection image, the position of the same candidate pixel is also calculated by utilizing a fixed support region.

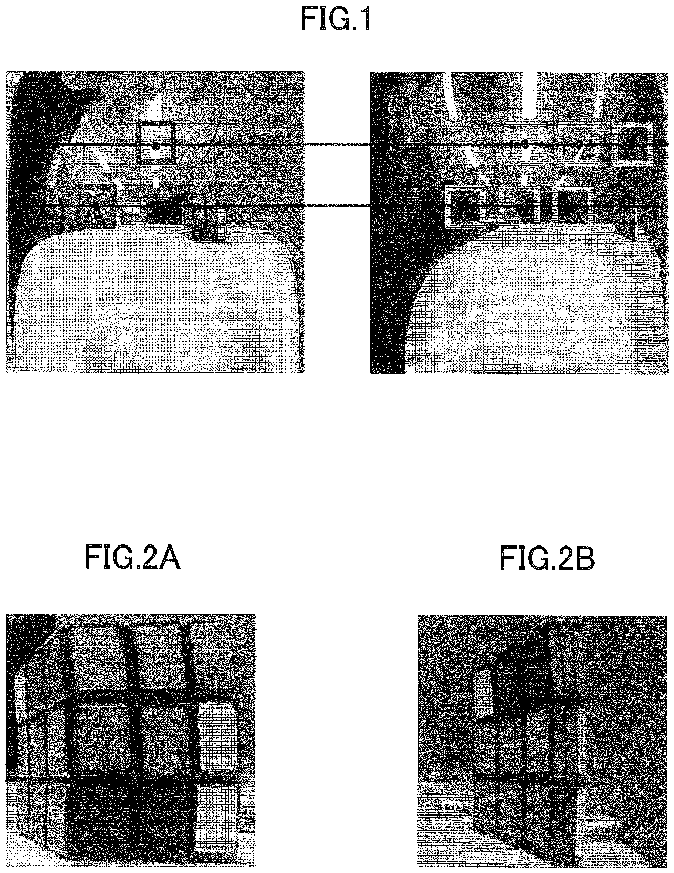

As set forth above, when a stereo camera is made up of panoramic cameras like fisheye cameras, because of the imaging principle of the panoramic cameras, distortion may occur in the images acquired by the panoramic cameras. In this case, if the above-described matching cost computation step is still adopted when carrying out stereo matching, then, as shown in FIG. 1, regarding each given pixel in the left image (which is a reference projection image), it uses a fixed support region indicated by a dark-colored square therein, and for each candidate pixel in the right image (which is a target projection image corresponding to the reference projection image) pertaining to the same given pixel in the left image, it also utilizes a fixed support region presented by a light-colored square therein. Here it should be noted that FIG. 1 illustrates an example of performing matching cost computation on panoramic images by employing a conventional matching cost computation algorithm. At this time, due to the image distortion, the reference and target projection images (which may be generated by two panoramic cameras, respectively) do not have a one-to-one relationship in terms of positions. Additionally, the sizes and shapes of the same object in the reference and target projection images are also different, for instance, as presented in FIGS. 2A and 2B which illustrate the same object (i.e., a Rubik's Cube) gained from the left and right images in FIG. 1, respectively. As such, the pixels contained in the above-described fixed support regions may not come from the same object, and may result in relatively large deviations. In other words, the conventional approach of performing stereo matching by utilizing fixed support regions will no longer apply because this type of approach easily entails an incorrect disparity image/depth map.

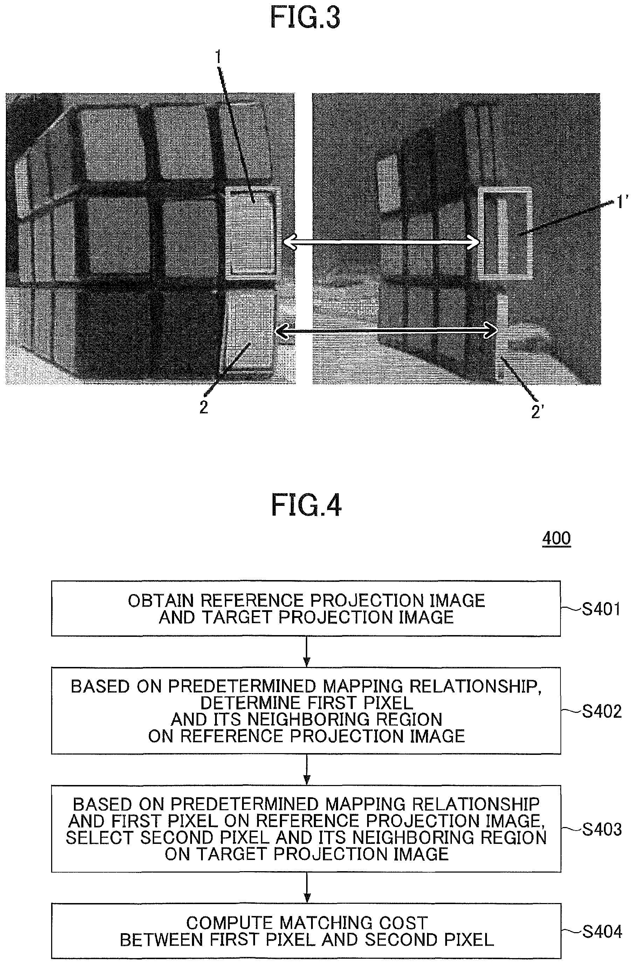

For this reason, by taking into account the factors which may affect the distortion occurring in the images taken by the panoramic cameras, the aim of the present disclosure is, for example, to adjust two corresponding fixed support regions (e.g., regions 1 and 1') in the left and right images (i.e., reference and target projection images) of FIG. 3 into two corresponding adaptive support regions (e.g., regions 2 and 2') therein according to a predetermined mapping relationship, and then, conduct matching cost computation based on the two corresponding adaptive support regions, so as to meet the imaging requirements of the panoramic cameras. In this way, it is possible to procure a more accurate matching result and disparity information on the basis of considering the image distortion. Here it should be noted that FIG. 3 illustrates an example of adjusting two corresponding fixed support regions in reference and target projection images (i.e., the left and right images) into two corresponding adaptive support regions therein.

<First Embodiment

A matching cost computation method is given in this embodiment.

FIG. 4 is a flowchart of the matching cost computation method according to this embodiment.

As presented in FIG. 4, the matching cost computation method includes STEPS S401 to S404 which are concretely depicted in what follows.

In STEP S401 of FIG. 4, a reference projection image and a target projection image are obtained which are an equirectangular projection image corresponding to a reference stereo image and an equirectangular projection image corresponding to a target stereo image, respectively.

In this step, the reference and target stereo images may be captured by two panoramic cameras (e.g., two fisheye, spherical, or omnidirectional cameras) in a stereo camera under two different angles of view, respectively. Of course, when the stereo camera contains more than two panoramic cameras, it is also possible to acquire the reference and target stereo images by using the respective panoramic cameras therein under multiple angles of view; that is, one or more may be included in the reference or target stereo image. Moreover, the reference or target stereo image may be a spherical image, a hemispherical image, or a part of the spherical image.

Here it should be noted that equirectangular projection is also known as equidistant cylindrical projection, geographic projection, or la carte parallelogrammatique projection (for more information about this, it is possible to see https://en.wikipedia.org/wiki/Equirectangular_projection).

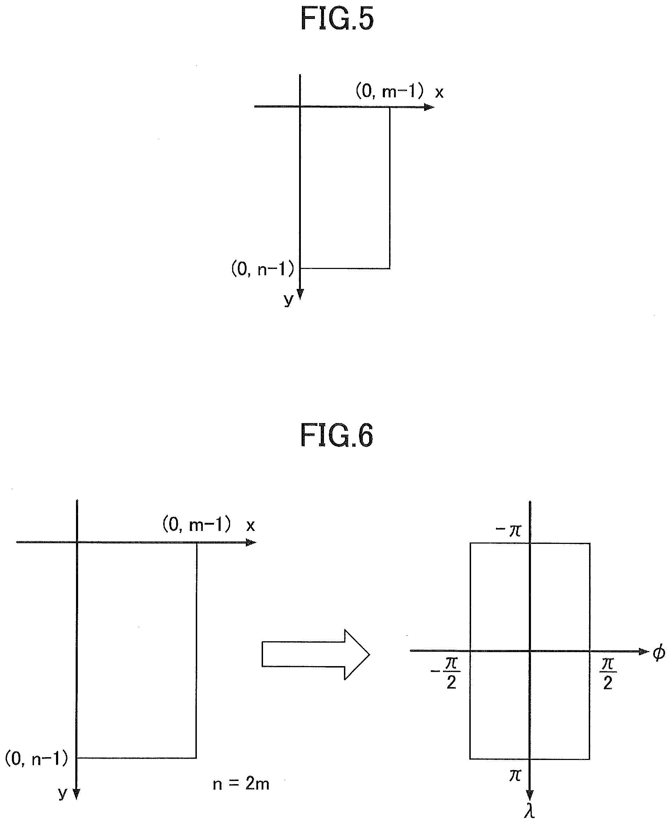

As an example, it is assumed that a spherical image is projected onto an mxn rectangular plane as shown in FIG. 5 (which illustrates an example of performing equirectangular projection on a stereo image) whose coordinate system is a X-Y planar coordinate system. When the projected image is the whole spherical surface, a relationship of n=2m is satisfied. Additionally, as presented in FIG. 6 (which illustrates an example of coordinate conversion from a X-Y planar coordinate system into a geographic coordinate system), the equirectangular projection image in FIG. 5 (i.e., the left image in FIG. 6) may also be converted from the X-Y planar coordinate system (hereinafter, also called a "third coordinate system") into a φ-λ latitude and longitude coordinate system (i.e., a geographic coordinate system) by utilizing the following coordinate conversion formula (1).

$$(x, y) \rightarrow (\phi, \lambda) = (\frac{\pi x}{m-1} - \frac{\pi}{2}, \frac{2\pi y}{n-1} - \pi) \qquad (1)$$

That is, the equirectangular projection image converted into the geographic coordinate system is alike to the distribution based on latitude and longitude, the λ axis being the Equator. The projection on the Equator does not have any deformation; however, there are serious distortions in the projections near the North and South Poles.

Referring again to FIG. 4; in STEP S402, a first pixel and its neighboring region on the reference projection image are determined on the grounds of a predetermined mapping relationship.

In an example, the predetermined mapping relationship may be obtained by acquiring stereo images and performing equirectangular projection on the stereo images so as to gain their projection images (i.e., equirectangular projection images); conducting circumscribed plane projection with respect to the stereo images so as to gain their perspective images; and taking a correspondence between a first coordinate system relating to the projection images and a second coordinate system pertaining to the perspective images as the mapping relationship.

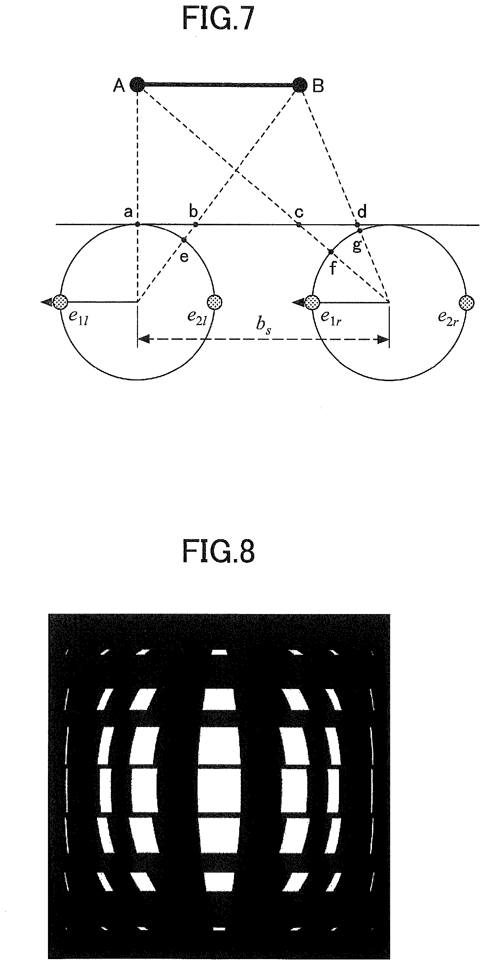

Here it should be noted that since the details about equirectangular projection have been described above, the related descriptions are omitted for the sake of convenience. However, as an instance, the process of circumscribed plane projection is concretely depicted on the basis of FIG. 7 as follows.

FIG. 7 illustrates an example of carrying out circumscribed plane projection in regard to stereo images respectively captured by two panoramic cameras in a stereo camera under two different angles of view.

As presented in FIG. 7 whose coordinate system is a U-V coordinate system, the plane, where the straight line passing through points a, b, c, and d is located, is the common circumscribed plane of two stereo images indicated by the left and right circles therein, and the plane is also between the two stereo images and the line segment AB therein. Here, the line segment AB refers to an object in an actual scene, the arcs ae and fg on the left and right circles stand for the images of the object AB on the respective stereo images, and the left and right stereo images correspond to reference and target stereo images whose equirectangular projection images may be converted into the φ-λ latitude and longitude coordinate system, as set forth above.

It is obvious that in FIG. 7, the arc ae is not equal to the arc fg. In addition, since the line segments ab and cd are two projections of the object AB on the common circumscribed plane (i.e., two perspective images), according to the similarity between trigonometric functions as well as the correspondences between the two stereo images and the two perspective images, it may be known that the line segment ab is equal to the line segment cd (i.e., ab=cd).

As such, in this example, it is possible to utilize the perspective images ab and cd to surmise, according to inverse perspective projection (IPP) transform, the projections of the arcs ae and fg in the corresponding projection images (i.e., equirectangular projection images), so as to acquire the correspondence between the first coordinate system relating to the projection images and the second coordinate system pertaining to the perspective images to serve as the mapping relationship, as expressed by the following formula (2).

$$(\phi, \lambda) \rightarrow (u, v) = (\frac{\tan(\phi)}{\cos(\lambda)}, \tan(\lambda)) \qquad (2)$$

Here, the first coordinate system may be the φ-λ latitude and longitude coordinate system which may be acquired by using the coordinate conversion formula (1) above, for instance.

After obtaining the predetermined mapping relationship, it is possible to acquire the first pixel and its neighboring region on the reference projection image on the basis of the mapping relationship.

In an example, the first pixel and its neighboring region may be gained by acquiring a circumscribed plane projection of the reference stereo image to serve as a reference perspective image; obtaining, based on the predetermined mapping relationship, a first projection point on the reference perspective image with respect to the first pixel on the reference projection image, and selecting a surrounding region having a predetermined shape, of the first projection point (corresponding to the first pixel) on the reference perspective image to serve as a first projection region; and determining, based on the predetermined mapping relationship, a region on the reference projection image corresponding to the first projection region to serve as the neighboring region (also called a "first neighboring region") of the first pixel.

In particular, first a first pixel, whose coordinates (x,y) are in the third coordinate system, on the reference projection image is determined to serve as a reference pixel. Next, the coordinates (x,y) of the first pixel are converted into $(\varphi,\lambda)$ in the $\varphi$-$\lambda$ latitude and longitude coordinate system, then mapped onto the reference perspective image according to the predetermined mapping relationship so as to obtain a first projection point (u,v) in the U-V coordinate system. At this time, on the basis of the first projection point (u,v), it is possible to choose its surrounding region with a predetermined shape to serve as a first projection region. Here, a pixel in the first projection region is denoted as $(u^*,v^*)$, and the set of the pixels in the first projection region is expressed as $N_{(u,v)}$. And then, the first projection region is projected back to the reference projection image in the $\varphi$-$\lambda$ latitude and longitude coordinate system on the basis of the predetermined mapping relationship so as to acquire a first neighboring region. Here, a pixel in the first neighboring region is denoted as $(\varphi^*,\lambda^*)$, and the set of the pixels in the first neighboring region is expressed as $S_{(\varphi,\lambda)}$.

Thus, the following formula (3) may be obtained.

$$S_{(\phi,\lambda)} = \{(\phi^*,\lambda^*),(u^*,v^* \in N_{(u,v)})\} \qquad (3)$$

Furthermore, on the basis of the following formula (4), it is possible to derive a formula (5) below.

$$(u,v) = (\frac{\tan(\phi)}{\cos(\lambda)},\tan(\lambda)) \qquad (4)$$

$$(u^*,v^*) = (\frac{\tan(\phi^*)}{\cos(\lambda^*)},\tan(\lambda^*)) \qquad (5)$$

As a result, in light of the above, it is possible to, regarding each pixel on the reference projection image, procure a first neighboring region on the reference projection image corresponding to the same pixel therein, so that it is possible to self-adaptively support matching cost computation when the related stereo camera is composed of panoramic cameras.

Here it should be noted that in a case where the first projection regions of plural discrete first pixels selected on the reference perspective image are rectangles having the same shape and size, the shapes and sizes of the first neighboring regions projected back to the reference projection image vary with their positions, as presented in FIG. 8 which illustrates an exemplary distribution of first neighboring regions obtained by projecting, after first projection regions having the same shape and size are chosen on the related reference perspective image, the first projection regions onto the related reference projection image. This may also present the distortion of the same object at different positions on the reference projection images.

Referring to FIG. 4 again; in STEP S403, a second pixel and its neighboring region (also called a "second neighboring region") on the target projection image are selected on the basis of the predetermined mapping relationship and the first pixel on the reference projection image. The second pixel and the second neighboring region may be acquired by choosing, based on the first pixel, a pixel on the target projection image corresponding to the first pixel so as to serve as the second pixel; obtaining a circumscribed plane projection of the target stereo image so as to serve as a target perspective image; obtaining, based on the predetermined mapping relationship, a second projection point on the target perspective image with respect to the second pixel on the target projection image, and selecting a surrounding region with a predetermined shape, of the second projection point on the target perspective image so as to serve as a second projection region; and determining, based on the predetermined mapping relationship, a region on the target projection image corresponding to the second projection region to serve as the second neighboring region of the second pixel.

In an example, the second pixel on the target projection image may be chosen on the grounds of the gray level of the first pixel. The second pixel may include plural pixels selected according to a predetermined rule. In this case, the second neighboring region obtained may also contain plural neighboring regions corresponding to the plural pixels selected. Moreover, for each second pixel, it is also possible to acquire a second neighboring region on the target projection image corresponding to the same second pixel therein in a way similar to the way of obtaining the first neighboring region of the first pixel on the reference projection image in STEP S402 of FIG. 4.

Here it should be noted that the first and second projection regions selected in STEPS S402 and S403 of FIG. 4 may also have shapes other than rectangles such as ellipses, circles, squares, and so on and so forth.

Referring again to FIG. 4; in STEP S404, the matching cost between the first pixel and the second pixel is computed on the basis of the first pixel and the first neighboring region as well as the second pixel and the second neighboring region.

After the first neighboring region and the second neighboring region are given, it is possible to carry out matching cost computation with respect to the first pixel and the second pixel. In this step, the related matching cost computation approach may be inclusive of a SAD (Sum of Absolute Differences) based matching algorithm, a SSD (Sum of Squared Differences) based matching algorithm, a NCC (Normalized Cross-Correlation) based algorithm, a CT (Census Transform) based algorithm, etc. Here it should be noted that since the number of pixels in the first neighboring region may be different from the number of pixels in the second neighboring region, it is necessary to perform normalization on them before conducting matching cost computation. For instance, it is possible to calculate the differences of the gray levels, the tones, and/or the shades between the pixels in the first and second neighboring regions by means of interpolation and weighted mean.

In an example, after computing the matching cost between the first and second pixels, it is also possible to calculate a disparity and a depth corresponding to the disparity on the grounds of the matching cost. The disparity and the depth may be calculated by obtaining a matching cost curve of the first pixel by way of the matching cost; selecting, based on a predetermined rule, a first disparity on the matching cost curve to serve as the disparity between the first and second pixels; and calculating, based on the disparity between the first and second pixels, the depth corresponding to the first disparity.

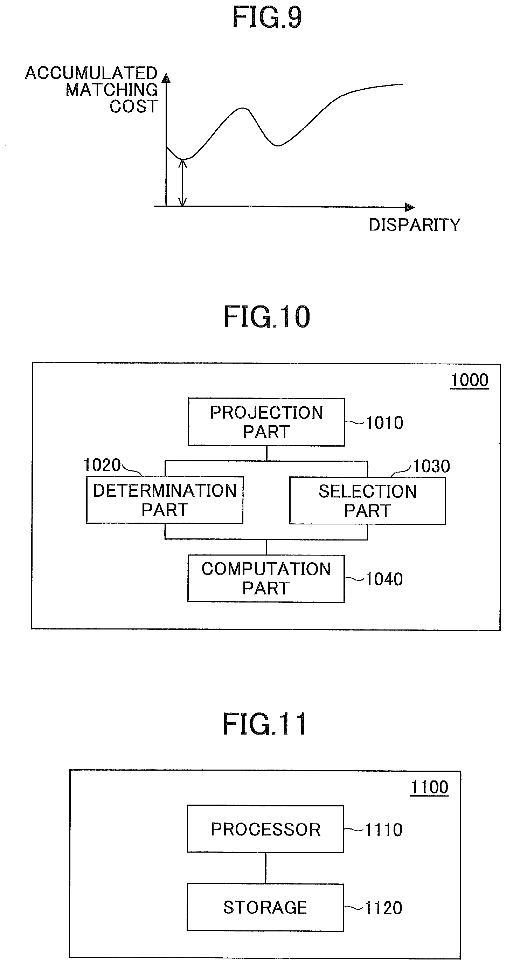

FIG. 9 illustrates an exemplary matching cost curve which shows the relationship between accumulated matching costs and disparities.

In this case, after obtaining the relationship between accumulated matching costs and disparities, it is possible to select, based on a predetermined rule, a first disparity on the matching cost curve to serve as the disparity between the first and second pixels. For example, the distance between the first and second pixels corresponding to a point on the matching cost curve, at which the difference of the related gray levels, the related tones, or the related shades is minimum, may be chosen as the first disparity. And then, it is possible to calculate, based on the first disparity (serving as the disparity between the first and second pixels), a depth corresponding to the first disparity, and then, obtain a depth map.

Here it should be noted that in this embodiment, the relationship between the first disparity and the depth may be expressed by the following equation (6).

$$z = \frac{B}{\tan(\phi_l) - \tan(\phi_r)} \bullet \cos(\lambda_r) \qquad (6)$$

Here, z means the depth; d denotes the first disparity; B stands for the length of a base line which refers to the distance between the centers of imaging sensors of two panoramic cameras; and $(\varphi_l, \lambda_l)$ and $(\varphi_r, \lambda_r)$ are indicative of the $\varphi$-$\lambda$ coordinates (in the $\varphi$-$\lambda$ latitude and longitude coordinate system) of the reference and target projection images, respectively.

Next, on the basis of the correspondence between the X-Y planar coordinate system and the $\varphi$-$\lambda$ latitude and longitude coordinate system, i.e., the following formulas (7) to (9), it is possible to gain the depth z corresponding to the first disparity d, and then, convert the relevant disparity image into a depth map.

$$(x_l, y_l) \rightarrow (\varphi_l, \lambda_l) \qquad (7)$$

$$(x_r, y_r) \rightarrow (\varphi_r, \lambda_r) \qquad (8)$$

$$(x_l, y_l) = (x_r + d, y_r) \qquad (9)$$

Therefore, by utilizing the matching cost computation method according to this embodiment, it is possible to respectively conduct projection with respect to reference and target stereo images captured by panoramic cameras forming a stereo camera, and determine, based on the predetermined mapping relationship, two corresponding pixels and their neighboring regions in the related reference and target projection images, so as to compute the matching cost between two corresponding pixels. Moreover, since the factors which may affect the distortion occurring in the stereo images obtained by the panoramic cameras are taken in account by using the predetermined mapping relationship, it is also possible to procure a more accurate matching result and disparity information.

<Second Embodiment

In this embodiment, a matching cost computation device is given.

FIG. 10 is a block diagram of a matching cost computation device 1000 according to this embodiment, which may be configured to carry out the matching cost computation method according to the first embodiment.

As presented in FIG. 10, the matching cost computation device 1000 is inclusive of a projection part 1010, a determination part 1020, a selection part 1030, and a computation part 1040. Aside from these parts, the matching cost computation device 1000 may further contain other parts which are not closely relating to this embodiment, of course.

The projection part 1010 may be configured to conduct STEP S401 of FIG. 4, i.e., obtain a reference projection image and a target projection image which are an equirectangular projection image corresponding to a reference stereo image and an equirectangular projection image corresponding to a target stereo image, respectively.

The determination part 1020 may be configured to carry out STEP S402 in FIG. 4, i.e., determine a first pixel and its neighboring region on the reference projection image in light of a predetermined mapping relationship.

The selection part 1030 may be configured to execute STEP S403 of FIG. 4, i.e., select a second pixel and its neighboring region on the target projection image on the basis of the predetermined mapping relationship and the first pixel on the reference projection image.

The computation part 1040 may be configured to implement STEP S404 in FIG. 4, i.e., compute the matching cost between the first pixel and the second pixel on the grounds of the first pixel and its neighboring region as well as the second pixel and its neighboring region.

Here it should be noted that the concrete descriptions of STEPS S401 to S404 of FIG. 4 are omitted for the sake of convenience because they have been depicted in detail in the first embodiment.

In addition, the matching cost computation 1000 may also include a first calculation part and a second calculation part (not shown in the drawings).

The first calculation part may be configured to calculate the predetermined mapping relationship, as described in the first embodiment.

The second calculation part may be configured to calculate, after acquiring the matching cost between the first and second pixels, a disparity and its corresponding depth according to the matching cost. For more information on this point, it is possible to see the related description in the first embodiment.

<Third Embodiment

Another matching cost computation device is provided in this embodiment.

FIG. 11 illustrates a block diagram of a matching cost computation device 1100 according to this embodiment.

As shown in FIG. 11, the matching cost computation device 1100 includes at least one processor 1110 and a storage 1120. Of course, it is obvious that other parts such as a stereo camera composed of multiple panoramic cameras, an output unit, and the like may also be contained in the matching cost device 1100.

The processor 1110 (e.g., a central processing unit) and the storage 1120 may be connected via a bus. The storage 1120 may be configured to store computer-executable instructions (i.e. an application program) for execution by the processor 1110 and intermediate data during a calculation process of the processor 1110. The computer-executable instructions, when executed, may cause the processor 1110 to carry out the matching cost computation method according to the first embodiment.

Therefore, it may be understood according to the above that in the second and third embodiments, it is possible to respectively conduct projection with respect to a reference stereo image and a target stereo image captured by panoramic cameras forming a stereo camera, and determine, based on the predetermined mapping relationship, two corresponding pixels and their neighboring regions in the related reference and target projection images, so as to compute the matching cost between two corresponding pixels. Furthermore, since the factors which may affect the distortion occurring in the stereo images obtained by the panoramic cameras are taken in account by using the predetermined mapping relationship, it is also possible to procure a more accurate matching result and disparity information.

Here it should be noted that the embodiments of the present disclosure may be implemented in any convenient form, for example, using dedicated hardware or a mixture of dedicated hardware and software. The embodiments of the present disclosure may be implemented as computer software implemented by one or more networked processing apparatuses. The network may comprise any conventional terrestrial or wireless communications network, such as the Internet. The processing apparatuses may comprise any suitably programmed apparatuses such as a general-purpose computer, a personal digital assistant, a mobile telephone (such as a WAP or 3G-compliant phone) and so on. Since the embodiments of the present disclosure can be implemented as software, each and every aspect of the present disclosure thus encompasses computer software implementable on a programmable device.

The computer software may be provided to the programmable device using any storage medium for storing processor-readable code such as a floppy disk, a hard disk, a CD ROM, a magnetic tape device or a solid state memory device.

The hardware platform includes any desired hardware resources including, for example, a central processing unit (CPU), a random access memory (RAM), and a hard disk drive (HDD). The CPU may include processors of any desired type and number. The RAM may include any desired volatile or nonvolatile memory. The HDD may include any desired nonvolatile memory capable of storing a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

While the present disclosure is described with reference to the specific embodiments chosen for purpose of illustration, it should be apparent that the present disclosure is not limited to these embodiments, but numerous modifications could be made thereto by a person skilled in the art without departing from the basic concept and technical scope of the present disclosure as defined in appended claims.

**Claims**

1. A computer-implemented matching cost computation method comprising:

an obtainment step (S401) of obtaining a reference projection image and a target projection image, the reference projection image being an equirectangular projection image corresponding to a reference stereo image and the target projection image being an equirectangular projection image corresponding to a target stereo image, wherein the stereo images are captured by panoramic cameras forming a stereo camera;

a determination step (S402) of determining, based on a predetermined mapping relationship, a first pixel and a first neighboring region of the first pixel on the reference projection image;

a selection step (S403) of selecting, based on the predetermined mapping relationship and the first pixel on the reference projection image, a second pixel and a second neighboring region of the second pixel on the target projection image;

a computation step (S404) of computing, based on the first pixel and the first neighboring region as well as the second pixel and the second neighboring region, a matching cost between the first pixel and the second pixel; and, further comprising:

a first calculation step of calculating the predetermined mapping relationship, including

a sub step of performing equirectangular projection on the stereo images so as to gain projection images of the stereo images;

a sub step of conducting circumscribed plane projection with respect to the stereo images so as to gain perspective images of the stereo images, wherein the circumscribed plane projection corresponds to projecting the stereo images onto a plane tangential to the stereo images and between the stereo images and an object in an actual scene; and

a sub step of procuring a correspondence between a first coordinate system of the projection images and a second coordinate system of the perspective images to serve as the predetermined mapping relationship.

2. The matching cost computation method according to claim 1, wherein,
the first coordinate system of the projection images is a latitude and longitude coordinate system which is obtained by carrying out equirectangular projection and coordinate conversion in regard to the stereo images.

3. The matching cost computation method according to claim 1 or 2, wherein, the determination step (S402) includes

a sub step of acquiring a circumscribed plane projection of the reference stereo image to serve as a reference perspective image;
a sub step of determining, based on the predetermined mapping relationship, a first projection point on the reference perspective image with respect to the first pixel on the reference projection image, and then, choosing a surrounding region having a predetermined shape, of the first projection point on the reference perspective image to serve as a first projection region; and
a sub step of selecting, based on the predetermined mapping relationship, a corresponding region on the reference projection image with respect to the first projection region on the reference perspective image to serve as the first neighboring region of the first pixel.

4. The matching cost computation method according to claim 1, 2 or 3, wherein the selection step (S403) includes:

a sub step of selecting, based on the first pixel on the reference projection image, the second pixel on the target projection image corresponding to the first pixel;
a sub step of acquiring a circumscribed plane projection of the target stereo image to serve as a target perspective image;
a sub step of determining, based on the predetermined mapping relationship, a second projection point on the target perspective image with respect to the second pixel on the target projection image, and then, choosing a surrounding region having a predetermined shape, of the second projection point on the target perspective image to serve as a second projection region; and
a sub step of selecting, based on the predetermined mapping relationship, a corresponding region on the target projection image with respect to the second projection region on the target perspective image to serve as the second neighboring region of the second pixel.

5. The matching cost computation method according to any one of claims 1 to 4, wherein the computation step includes:
a sub step of carrying out normalization with regard to pixels in the first neighboring region and the second neighboring region so as to compute the matching cost between the first pixel and the second pixel.

6. The matching cost computation method according to any one of claims 1 to 5, further comprising:
a second calculation step of calculating a depth, including

a sub step of obtaining, based on the matching cost between the first pixel and the second pixel, a matching cost curve of the first pixel;
a sub step of selecting, based on a predetermined rule, a first disparity on the matching cost curve to serve as a disparity between the first pixel and the second pixel; and
a sub step of calculating, based on the disparity between the first pixel and the second pixel, the depth corresponding to the first disparity.

7. A matching cost computation device comprising:

an obtainment part (1010) configured to obtain a reference projection image and a target projection image, the reference projection image being an equirectangular projection image corresponding to a reference stereo image and the target projection image being an equirectangular projection image corresponding to a target stereo image, wherein the stereo images are captured by panoramic cameras forming a stereo camera;
a determination part (1020) configured to determine, based on a predetermined mapping relationship, a first pixel and a first neighboring region of the first pixel on the reference projection image;
a selection part (1030) configured to select, based on the predetermined mapping relationship and the first pixel on the reference projection image, a second pixel and a second neighboring region of the second pixel on the target projection image;
a computation part (1040) configured to compute, based on the first pixel and the first neighboring region as well as the second pixel and the second neighboring region, a matching cost between the first pixel and the second pixel; and, further comprising:
a first calculation part configured to calculate the predetermined mapping relationship by way of

a sub step of performing equirectangular projection on the stereo images so as to gain projection images of the stereo images;
a sub step of conducting circumscribed plane projection with respect to the stereo images so as to gain perspective images of the stereo image, wherein the circumscribed plane projection corresponds to projecting the stereo images onto a plane tangential to the stereo images and between the stereo images and an object in an actual scene; and
a sub step of procuring a correspondence between a first coordinate system of the projection images and a second coordinate system of the perspective images to serve as the predetermined mapping relationship.

8. The matching cost computation device according to claim 7, further comprising:

a second calculation part configured to calculate a depth by means of
a sub step of obtaining, based on the matching cost between the first pixel and the second pixel, a matching cost curve of the first pixel;
a sub step of selecting, based on a predetermined rule, a first disparity on the matching cost curve to serve as a disparity between the first pixel and the second pixel; and
a sub step of calculating, based on the disparity between the first pixel and the second pixel, the depth corresponding to the first disparity.

9. A matching cost computation device comprising:

a processor (1110); and
a storage (1120) connected to the processor (1110), storing computer-executable instructions for execution by the processor (1110), wherein, the computer-executable instructions, when executed, cause the processor (1110) to implement the matching cost computation method according to any one of claims 1 to 6.

**Patentansprüche**

1. Computerimplementiertes Anpassungskostenberechnungsverfahren, umfassend:

einen Erlangungsschritt (S401) zum Erlangen eines Referenzprojektionsbilds und eines Zielprojektionsbilds, wobei das Referenzprojektionsbild ein äquirektanguläres Projektionsbild korrespondierend mit einem Referenzstereobild ist und das Zielprojektionsbild ein äquirektanguläres Projektionsbild korrespondierend mit einem Zielstereobild ist, wobei die Stereobilder durch Panoramakameras, die eine Stereokamera bilden, erfasst werden;
einen Bestimmungsschritt (S402) des Bestimmens, basierend auf einer im Voraus bestimmten Abbildungsbeziehung, eines ersten Bildpunkts und einer ersten benachbarten Region des ersten Bildpunkts auf dem Referenzprojektionsbild;
einen Auswahlschritt (S403) des Auswählens, basierend auf der im Voraus bestimmten Abbildungsbeziehung und dem ersten Bildpunkt auf dem Referenzprojektionsbild, eines zweiten Bildpunkts und einer zweiten benachbarten Region des zweiten Bildpunkts auf dem Zielprojektionsbild;
einen Berechnungsschritt (S404) des Berechnens, basierend auf dem ersten Bildpunkt und der ersten benachbarten Region sowie dem zweiten Bildpunkt und der zweiten benachbarten Region, von einer Anpassungskost zwischen dem ersten Bildpunkt und dem zweiten Bildpunkt; und ferner umfassend:

einen ersten Berechnungsschritt des Berechnens der im Voraus bestimmten Abbildungsbeziehung, enthaltend
einen Teilschritt des Durchführens von äquirektangulärer Projektion auf den Stereobildern, um Projektionsbilder der Stereobilder zu gewinnen;
einen Teilschritt des Ausführens einer umschriebenen Ebenenprojektion in Bezug auf die Stereobilder, um perspektivische Bilder der Stereobilder zu gewinnen, wobei die umschriebene Ebenenprojektion mit Projizieren der Stereobilder auf eine Ebene tangential zu den Stereobildern und zwischen den Stereobildern und einem Objekt in einer tatsächlichen Szene korrespondiert; und
einen Teilschritt des Herbeiführens einer Korrespondenz zwischen einem ersten Koordinatensystem der Projektionsbilder und einem zweiten Koordinatensystem der perspektivischen Bilder, um als die im Voraus bestimmte Abbildungsbeziehung zu dienen.

2. Anpassungskostenberechnungsverfahren nach Anspruch 1, wobei
das erste Koordinatensystem der Projektionsbilder ein Breitengrad- und Längengrad-Koordinatensystem ist, das durch Ausführen von äquirektangulärer Projektion und Koordinatenumwandlung in Bezug auf die Stereobilder erhalten wird.

3. Anpassungskostenberechnungsverfahren nach Anspruch 1 oder 2, wobei der Bestimmungsschritt (S402) enthält

einen Teilschritt des Erfassens einer umschriebenen Ebenenprojektion des Referenzstereobilds, um als ein perspektivisches Referenzbild zu dienen;
einen Teilschritt des Bestimmens, basierend auf der im Voraus bestimmten Abbildungsbeziehung, eines ersten Projektionspunkts auf dem perspektivischen Referenzbild in Bezug auf den ersten Bildpunkt auf dem Referenzprojektionsbild und dann Wählen einer umgebenden Region mit einer im Voraus bestimmten Form des ersten Projektionspunkts auf dem perspektivischen Referenzbild, um als eine erste Projektionsregion zu dienen; und
einen Teilschritt des Auswählens, basierend auf der im Voraus bestimmten Abbildungsbeziehung, einer korrespondierenden Region auf dem Referenzprojektionsbild in Bezug auf die erste Projektionsregion auf dem perspektivischen Referenzbild, um als die erste benachbarte Region des ersten Bildpunkts zu dienen.

4. Anpassungskostenberechnungsverfahren nach Anspruch 1, 2 oder 3, wobei der Auswahlschritt (S403) enthält:

einen Teilschritt des Auswählens, basierend auf dem ersten Bildpunkt auf dem Referenzprojektionsbild, des zweiten Bildpunkts auf dem Zielprojektionsbild korrespondierend mit dem ersten Bildpunkt;
einen Teilschritt des Erfassens einer umschriebenen Ebenenprojektion des Zielstereobilds, um als ein perspektivisches Zielbild zu dienen;
einen Teilschritt des Bestimmens, basierend auf der im Voraus bestimmten Abbildungsbeziehung, eines zweiten Projektionspunkts auf dem perspektivischen Zielbild in Bezug auf den zweiten Bildpunkt auf dem Zielprojektionsbild und dann Wählen einer umgebenden Region mit einer im Voraus bestimmten Form des zweiten Projektionspunkts auf dem perspektivischen Zielbild, um als eine zweite Projektionsregion zu dienen; und
einen Teilschritt des Auswählens, basierend auf der im Voraus bestimmten Abbildungsbeziehung, einer korrespondierenden Region auf dem Zielprojektionsbild in Bezug auf die zweite Projektionsregion auf dem perspektivischen Zielbild, um als die zweite benachbarte Region des zweiten Bildpunkts zu dienen.

5. Anpassungskostenberechnungsverfahren nach einem der Ansprüche 1 bis 4, wobei der Berechnungsschritt enthält:
einen Teilschritt des Ausführens von Normalisierung in Bezug auf Bildpunkte in der ersten benachbarten Region und der zweiten benachbarten Region, um die Anpassungskosten zwischen dem ersten Bildpunkt und dem zweiten Bildpunkt zu berechnen.

**6.** Anpassungskostenberechnungsverfahren nach einem der Ansprüche 1 bis 5, ferner umfassend:

einen zweiten Berechnungsschritt des Berechnens einer Tiefe, enthaltend einen Teilschritt des Erlangens, basierend auf den Anpassungskosten zwischen dem ersten Bildpunkt und dem zweiten Bildpunkt, einer Anpassungskostenkurve des ersten Bildpunkts;
einen Teilschritt des Auswählens, basierend auf einer im Voraus bestimmten Regel, einer ersten Disparität auf der Anpassungskostenkurve, um als eine Disparität zwischen dem ersten Bildpunkt und dem zweiten Bildpunkt zu dienen; und
einen Teilschritt des Berechnens, basierend auf der Disparität zwischen dem ersten Bildpunkt und dem zweiten Bildpunkt, der Tiefe korrespondierend mit der ersten Disparität.

**7.** Anpassungskostenberechnungsvorrichtung, umfassend:

einen Erlangungsteil (1010), konfiguriert zum Erlangen eines Referenzprojektionsbilds und eines Zielprojektionsbilds, wobei das Referenzprojektionsbild ein äquirektanguläres Projektionsbild korrespondierend mit einem Referenzstereobild ist und das Zielprojektionsbild ein äquirektanguläres Projektionsbild korrespondierend mit einem Zielstereobild ist, wobei die Stereobilder durch Panoramakameras, die eine Stereokamera bilden, erfasst werden;
einen Bestimmungsteil (1020), konfiguriert zum Bestimmen, basierend auf einer im Voraus bestimmten Abbildungsbeziehung, eines ersten Bildpunkts und einer ersten benachbarten Region des ersten Bildpunkts auf dem Referenzprojektionsbild;
einen Auswahlteil (1030), konfiguriert zum Auswählen, basierend auf der im Voraus bestimmten Abbildungsbeziehung und dem ersten Bildpunkt auf dem Referenzprojektionsbild, eines zweiten Bildpunkts und einer zweiten benachbarten Region des zweiten Bildpunkts auf dem Zielprojektionsbild;
einen Berechnungsteil (1040), konfiguriert zum Berechnen, basierend auf dem ersten Bildpunkt und der ersten benachbarten Region sowie dem zweiten Bildpunkt und der zweiten benachbarten Region, von einer Anpassungskost zwischen dem ersten Bildpunkt und dem zweiten Bildpunkt; und ferner umfassend:

einen ersten Berechnungsteil, konfiguriert zum Berechnen der im Voraus bestimmten Abbildungsbeziehung durch
einen Teilschritt des Durchführens von äquirektangulärer Projektion auf den Stereobildern, um Projektionsbilder der Stereobilder zu gewinnen;
einen Teilschritt des Ausführens einer umschriebenen Ebenenprojektion in Bezug auf die Stereobilder, um perspektivische Bilder des Stereobilds zu gewinnen, wobei die umschriebene Ebenenprojektion mit Projizieren der Stereobilder auf eine Ebene tangential zu den Stereobildern und zwischen den Stereobildern und einem Objekt in einer tatsächlichen Szene korrespondiert; und
einen Teilschritt des Herbeiführens einer Korrespondenz zwischen einem ersten Koordinatensystem der Projektionsbilder und einem zweiten Koordinatensystem der perspektivischen Bilder, um als die im Voraus bestimmte Abbildungsbeziehung zu dienen.

**8.** Anpassungskostenberechnungsvorrichtung nach Anspruch 7, ferner umfassend:

einen zweiten Berechnungsteil, konfiguriert zum Berechnen einer Tiefe durch
einen Teilschritt des Erlangens, basierend auf der Anpassungskost zwischen dem ersten Bildpunkt und dem zweiten Bildpunkt, einer Anpassungskostenkurve des ersten Bildpunkts;
einen Teilschritt des Auswählens, basierend auf einer im Voraus bestimmten Regel, einer ersten Disparität auf der Anpassungskostenkurve, um als eine Disparität zwischen dem ersten Bildpunkt und dem zweiten Bildpunkt zu dienen; und
einen Teilschritt des Berechnens, basierend auf der Disparität zwischen dem ersten Bildpunkt und dem zweiten Bildpunkt, der Tiefe korrespondierend mit der ersten Disparität.

**9.** Anpassungskostenberechnungsvorrichtung, umfassend:

einen Prozessor (1110); und
einen Speicher (1120), verbunden mit dem Prozessor (1110), der computerausführbare Anweisungen zur Ausführung durch den Prozessor (1110) speichert,
wobei die computerausführbaren Anweisungen, wenn sie ausgeführt werden, bewirken, dass der Prozessor (1110) das Anpassungskostenberechnungsverfahren nach einem der Ansprüche 1 bis 6 implementiert.

**Revendications**

**1.** Procédé de calcul de coût de mise en correspondance mis en œuvre par ordinateur comprenant :

une étape d'obtention (S401) qui consiste à obtenir une image en projection de référence et une image en projection cible, l'image en projection de référence étant une image en projection équirectangulaire qui correspond à une image stéréo de référence et l'image en projection cible étant une image en projection équirectangulaire qui correspond à une image stéréo cible, dans lequel les images stéréo sont capturées par des caméras panoramiques qui forment une caméra stéréo ;

une étape de détermination (S402) qui consiste à déterminer, sur la base d'une relation de cartographie prédéterminée, un premier pixel et une première région voisine du premier pixel sur l'image en projection de référence ;

une étape de sélection (S403) qui consiste à sélectionner, sur la base de la relation de cartographie prédéterminée et du premier pixel sur l'image en projection de référence, un second pixel et une seconde région voisine du second pixel sur l'image en projection cible ;

une étape de calcul (S404) qui consiste à calculer, sur la base du premier pixel et de la première région voisine de même que sur la base du second pixel et de la seconde région voisine, un coût de mise en correspondance entre le premier pixel et le second pixel ; et comprenant en outre :

une première étape de calcul qui consiste à calculer la relation de cartographie prédéterminée, incluant :

une sous-étape qui consiste à réaliser une projection équirectangulaire sur les images stéréo de manière à se procurer des images en projection des images stéréo ;

une sous-étape qui consiste à mettre en œuvre une projection en plan circonscrite par rapport aux images stéréo de manière à se procurer des images en perspective des images stéréo, dans lequel la projection en plan circonscrite correspond à la projection des images stéréo sur un plan tangentiel aux images stéréo et entre les images stéréo et un objet dans une scène réelle ; et

une sous-étape qui consiste à obtenir une correspondance entre un premier système de coordonnées des images en projection et un second système de coordonnées des images en perspective pour jouer le rôle de la relation de cartographie prédéterminée.

2. Procédé de calcul de coût de mise en correspondance selon la revendication 1, dans lequel :
   le premier système de coordonnées des images en projection est un système de coordonnées en latitude et en longitude qui est obtenu en mettant en œuvre une projection équirectangulaire et une conversion de coordonnées eu égard aux images stéréo.

3. Procédé de calcul de coût de mise en correspondance selon la revendication 1 ou 2, dans lequel l'étape de détermination (S402) inclut :

   une sous-étape qui consiste à acquérir une projection en plan circonscrite de l'image stéréo de référence pour jouer le rôle d'image en perspective de référence ;
   une sous-étape qui consiste à déterminer, sur la base de la relation de cartographie prédéterminée, un premier point de projection sur l'image en perspective de référence par rapport au premier pixel sur l'image en projection de référence puis à choisir une région voisine, qui présente une forme prédéterminée, du premier point de projection sur l'image en perspective de référence pour jouer le rôle de première région en projection ; et
   une sous-étape qui consiste à sélectionner, sur la base de la relation de cartographie prédéterminée, une région correspondante sur l'image en projection de référence par rapport à la première région en projection sur l'image en perspective de référence pour jouer le rôle de première région voisine du premier pixel.

4. Procédé de calcul de coût de mise en correspondance selon la revendication 1, 2 ou 3, dans lequel l'étape de sélection (S403) inclut :

   une sous-étape qui consiste à sélectionner, sur la base du premier pixel sur l'image en projection de référence, le second pixel sur l'image en projection cible qui correspond au premier pixel ;
   une sous-étape qui consiste à acquérir une projection en plan circonscrite de l'image stéréo cible pour jouer le rôle d'une image en perspective cible ;
   une sous-étape qui consiste à déterminer, sur la base de la relation de cartographie prédéterminée, un second point de projection sur l'image en perspective cible par rapport au second pixel sur l'image en projection cible puis à choisir une région voisine, qui présente une forme prédéterminée, du second point de projection sur l'image en perspective cible pour jouer le rôle d'une seconde région en projection ; et
   une sous-étape qui consiste à sélectionner, sur la base de la relation de cartographie prédéterminée, une région correspondante sur l'image en projection cible par rapport à la seconde région en projection sur l'image en perspective cible pour jouer le rôle de seconde région voisine du second pixel.

5. Procédé de calcul de coût de mise en correspondance selon l'une quelconque des revendications 1 à 4, dans lequel l'étape de calcul inclut :
une sous-étape qui consiste à mettre en œuvre une normalisation eu égard à des pixels dans la première région voisine et dans la seconde région voisine de manière à calculer le coût de mise en correspondance entre le premier pixel et le second pixel.

**6.** Procédé de calcul de coût de mise en correspondance selon l'une quelconque des revendications 1 à 5, comprenant en outre :
une seconde étape de calcul qui consiste à calculer une profondeur, incluant :

une sous-étape qui consiste à obtenir, sur la base du coût de mise en correspondance entre le premier pixel et le second pixel, une courbe de coûts de mise en correspondance du premier pixel ;
une sous-étape qui consiste à sélectionner, sur la base d'une règle prédéterminée, une première disparité sur la courbe de coûts de mise en correspondance pour jouer le rôle de disparité entre le premier pixel et le second pixel ; et
une sous-étape qui consiste à calculer, sur la base de la disparité entre le premier pixel et le second pixel, la profondeur qui correspond à la première disparité.

**7.** Dispositif de calcul de coût de mise en correspondance comprenant :

une partie d'obtention (1010) qui est configurée pour obtenir une image en projection de référence et une image en projection cible, l'image en projection de référence étant une image en projection équirectangulaire qui correspond à une image stéréo de référence et l'image en projection cible étant une image en projection équirectangulaire qui correspond à une image stéréo cible, dans lequel les images stéréo sont capturées par des caméras panoramiques qui forment une caméra stéréo ;
une partie de détermination (1020) qui est configurée pour déterminer, sur la base d'une relation de cartographie prédéterminée, un premier pixel et une première région voisine du premier pixel sur l'image en projection de référence ;
une partie de sélection (1030) qui est configurée pour sélectionner, sur la base de la relation de cartographie prédéterminée et du premier pixel sur l'image en projection de référence, un second pixel et une seconde région voisine du second pixel sur l'image en projection cible ;
une partie de calcul (1040) qui est configurée pour calculer, sur la base du premier pixel et de la première région voisine de même que sur la base du second pixel et de la seconde région voisine, un coût de mise en correspondance entre le premier pixel et le second pixel ; et comprenant en outre :
une première partie de calcul qui est configurée pour calculer la relation de cartographie prédéterminée au moyen de :

une sous-étape qui consiste à réaliser une projection équirectangulaire sur les images stéréo de manière à se procurer des images en projection des images stéréo ;
une sous-étape qui consiste à mettre en œuvre une projection en plan circonscrite par rapport aux images stéréo de manière à se procurer des images en perspective des images stéréo, dans lequel la projection en plan circonscrite correspond à la projection des images stéréo sur un plan qui est tangentiel aux images stéréo et entre les images stéréo et un objet dans une scène réelle ; et
une sous-étape qui consiste à assurer une correspondance entre un premier système de coordonnées des images en projection et un second système de coordonnées des images en perspective pour jouer le rôle de la relation de cartographie prédéterminée.

**8.** Dispositif de calcul de coût de mise en correspondance selon la revendication 7, comprenant en outre :
une seconde partie de calcul qui est configurée pour calculer une profondeur au moyen de :

une sous-étape qui consiste à obtenir, sur la base du coût de mise en correspondance entre le premier pixel et le second pixel, une courbe de coûts de mise en correspondance du premier pixel ;
une sous-étape qui consiste à sélectionner, sur la base d'une règle prédéterminée, une première disparité sur la courbe de coûts de mise en correspondance pour jouer le rôle de disparité entre le premier pixel et le second pixel ; et
une sous-étape qui consiste à calculer, sur la base de la disparité entre le premier pixel et le second pixel, la profondeur qui correspond à la première disparité.

**9.** Dispositif de calcul de coût de mise en correspondance comprenant :

un processeur (1110) ; et
un moyen de stockage (1120), connecté au processeur (1110), qui stocke des instructions pouvant être exécutées par un ordinateur qui sont destinées à être exécutées par le processeur (1110) ;

dans lequel les instructions pouvant être exécutées par un ordinateur, lorsqu'elles sont exécutées, forcent le processeur (1110) à mettre en œuvre le procédé de calcul de coût de mise en correspondance selon l'une quelconque des revendications 1 à 6.

# FIG.1

# FIG.2A

# FIG.2B

# FIG.3

# FIG.4

400

| OBTAIN REFERENCE PROJECTION IMAGE AND TARGET PROJECTION IMAGE | S401 |

| BASED ON PREDETERMINED MAPPING RELATIONSHIP, DETERMINE FIRST PIXEL AND ITS NEIGHBORING REGION ON REFERENCE PROJECTION IMAGE | S402 |

| BASED ON PREDETERMINED MAPPING RELATIONSHIP AND FIRST PIXEL ON REFERENCE PROJECTION IMAGE, SELECT SECOND PIXEL AND ITS NEIGHBORING REGION ON TARGET PROJECTION IMAGE | S403 |

| COMPUTE MATCHING COST BETWEEN FIRST PIXEL AND SECOND PIXEL | S404 |

# FIG.5

# FIG.6

$n = 2m$

# FIG.7

# FIG.8

# FIG.9

ACCUMULATED
MATCHING
COST

DISPARITY

# FIG.10

```
                                                    1000

              ┌─────────────────┐
              │   PROJECTION    │──1010
              │      PART       │
              └─────────────────┘

1020──┐                              ┌──1030
┌─────────────────┐        ┌─────────────────┐
│  DETERMINATION  │        │    SELECTION    │
│      PART       │        │      PART       │
└─────────────────┘        └─────────────────┘

              ┌─────────────────┐
              │   COMPUTATION   │──1040
              │      PART       │
              └─────────────────┘
```

# FIG.11

```
                                    1100

        ┌─────────────────┐
        │    PROCESSOR    │──1110
        └─────────────────┘

        ┌─────────────────┐
        │     STORAGE     │──1120
        └─────────────────┘
```

19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **OHASHI AKIRA et al.** *Fisheye Stereo camera using equirectangular images*